# EUROPEAN PATENT SPECIFICATION

(11) **EP 2 562 281 B1**
(45) Date of publication and mention of the grant of the patent: **17.10.2018**
(21) Application number: 12179975.3
(22) Date of filing: 09.08.2012
(51) Int. Cl.: C22C 19/05, F01D 5/00, B23K 20/12

(54) **Ni-base alloy large member, Ni-base alloy welded structure made of same, and method for manufacturing structure thereof**
Langes Element aus einer Legierung auf Nickelbasis, daraus hergestellte geschweißte Struktur aus einer Legierung auf Nickelbasis und Verfahren zur Herstellung der Struktur daraus
Élément de grande taille en alliage à base de nickel, structure soudée en alliage à base de nickel fabriquée à partir de celui-ci et son procédé de fabrication de structure

(30) Priority: 23.08.2011 JP 2011181225
(43) Date of publication of application: 27.02.2013
(73) Proprietor: Mitsubishi Hitachi Power Systems, Ltd., Yokohama, Kanagawa 220-8401 (JP)
(72) Inventor: Imano, Shinya, Tokyo, 100-8220 (JP); Kamoshida, Hironori, Tokyo, 100-8220 (JP); Hirano, Satoshi, Tokyo, 100-8220 (JP); Seunghwan, Park, Tokyo, 100-8220 (JP); Yoshida, Takehiko, Tokyo, 100-8220 (JP)
(74) Representative: Beetz & Partner mbB

(56) References cited:
- EP-A1- 2 241 399
- EP-A2- 2 469 032
- RODELAS J ET AL: "Friction stir processing as a base metal preparation technique for modification of fusion weld microstructures", FRICTION STIR WELDING AND PROCESSING VI : PROCEEDINGS OF A SYMPOSIA ; HELD DURING THE TMS 2011 ANNUAL MEETING & EXHIBITION, SAN DIEGO, CALIFORNIA, USA, FEBRUARY 27 - MARCH 3, 2011,, 3 March 2011 (2011-03-03), pages 323-331, XP008157462, ISBN: 978-1-118-00201-8
- FULLER C B ET AL: "Surface modification with friction stir processing", SURFACE ENGINEERING ; PROCEEDINGS OF THE 4TH INTERNATIONAL SURFACE ENGINEERING CONFERENCE (4TH INTERNATIONAL SURFACE ENGINEERING CONFERENCE - 20050801 TO 20050803 - ST. PAUL, MN),, vol. 4, 1 August 2005 (2005-08-01), pages 95-101, XP009115866, ISBN: 978-0-87170-835-9

## Description

### [Technical Field]

The present invention relates to Ni-base alloy large-size members, Ni-base alloy welded structures made of the same, and methods for manufacturing the structures.

### [Background Art]

So as to obtain high efficiency steam turbines, it is considered to use Ni-base alloy for turbine rotors and boiler piping, for example, as described in PTL 1.

Turbine rotors and boiler piping made of Ni-base alloy are fabricated from Ni-base alloy large-size forged materials (Ni-base alloy large-size members) by TIG (Tungsten Inert Gas) welding or MIG (Metal Inert Gas) welding. Ni-base alloy large-size forged materials are generally manufactured with procedures below. The procedures are as follows: (1) vacuum melting, (2) electroslag remelting or vacuum arc remelting, (3) blooming forging, (4) finishing processing, and (5) heat treatment.

### [Citation List]

### [Patent Literature]

[PTL 1] Japanese Patent Laid-Open No. 2011-052308 (foreign counterpart application EP2302085A1)

An Ni-base alloy member constituting a Ni-base alloy welded structure comprising a modified layer is disclosed by Rodelas J. et al. in: "Friction stir processing as a base metal preparation technique for modification of fusion weld microstructures", Friction Stir Welding And Processing VI: Proceedings of a Symposia; held during the TMS 2011 Annual Meeting & Exhibition, San Diego, California, USA, February 27 - March 3, 2001).

### [Summary of Invention]

### [Technical Problem]

According to study of the inventor, during mock-up tests using Ni-base alloy large-size forged materials (a forging of a large ingot), hot cracks were found that had not occurred in preliminary study using a forging of a small ingot.

Therefore, an object of the invention is to provide Ni-base alloy large-size members of which hot crack can be suppressed, Ni-base alloy welded structures made of the same, and processes for fabricating the structures.

### [Solution to Problem]

The invention is characterized in that modified layers by treatment using Friction Stir Processing method (hereinafter referred to as FSP treatment) and solution treatment are formed in welding surfaces of Ni-base alloy large-size members that constitute Ni-base alloy welded structures, wherein thickness of the modified layers is 2 mm or more and the modified layers are formed with crystal grain size number 2 to 5.

### [Advantageous Effects of Invention]

According to the invention, Ni-base alloy large-size members of which hot crack can be suppressed, Ni-base alloy welded structures made of the same, and processes for fabricating the structures can be provided. Problems other than the above, construction, and advantageous effects will be made clear by the following description of embodiments.

### [Brief Description of Drawings]

Fig. 1A is a sketch of an optical microscopical observation result of a surface of a conventional Ni-base alloy large-size member.
Fig. 1B is a sketch of an optical microscopical observation result of a surface of a conventional Ni-base alloy large-size member (an enlarged drawing of Fig. 1A).
Fig. 2A is a planar and lateral schematic drawing of a Ni-base alloy large-size forged material according to the invention.
Fig. 2B is an enlarged drawing of part X in Fig. 2A.
Fig. 3A is a planar and lateral schematic drawing of a Ni-base alloy large-size welded structure to be fabricated by welding Ni-base alloy large-size members according to the invention.
Fig. 3B is an enlarged drawing of part Y in Fig. 3A.
Fig. 4 is a sectional schematic drawing of a turbine rotor to be fabricated with Ni-base alloy large-size members according to the invention.

### [Description of Embodiments]

Embodiments of the invention will be detailed below in reference to the drawings. However, the invention is not limited to the embodiments described below.

First, the process leading to the invention is explained.

The inventor examined and considered causes for hot cracks of Ni-base alloy large-size members. In consequence, the inventor found that the hot cracks are caused by appearance of strip-shaped carbide segregation layers and degradation of high-temperature ductility when Ni-base alloy large-size forged materials are manufactured. And furthermore, the inventor found that the strip-shaped carbide segregation layers can be made disappeared when cross section of the Ni-base alloy large forged materials that are to be welded is FSP treated and then solution treated. The invention is based on these findings. These findings are detailed below.

Main cause of the hot cracks of Ni-base alloy large-size members is considered to be the strip-shaped carbide segregation layers.

Weight of a Ni-base alloy ingot before dissolution exceeds 6 tons for higher manufacturing efficiency. Micro-segregation appears at the time of dissolution and solidification of such a large ingot and remains even after forging. Namely, C (carbon) and Mo (molybdenum) segregate in dendrite boundary regions, which are final solidification regions, and carbide concentrates in the regions. The carbide concentrated regions are stretched by forging, whereby a band-like structure in which carbide lines in the forging direction (aggregate of the plural strip-shaped carbide segregation layers) is formed.

Since the strip-shaped carbide segregation layers have low melting points, local melting occurs at the time of welding and hot cracks occur from the local melting points. In addition, microstructures of the forged material have fine crystal grains in the strip-shaped carbide segregation layers and become duplex grain structures in which crystal grains are rough, whereby mechanical properties are adversely affected.

Also, as other cause of the hot cracks of the Ni-base alloy large-size materials, degradation in high-temperature ductility is considered.

When forging and heat treatment are performed at a high temperature, crystal grains become rough and high-temperature ductility degrades. When high-temperature ductility degrades, hot cracks occur due to contraction of the forged materials during temperature reduction.

In order to reduce the two causes of the hot cracks described above, the invention applies FSP treatment and solution treatment on welding surfaces of the Ni-base alloy large-size members to form homogeneous modified layers.

When shafts of turbine rotors and boiler piping are manufactured, the Ni-base alloy is stretched by forging. The band-like structures are formed in the direction of forging (longitudinal direction).

The inventor thought that making impacts on the band-like structures in the direction perpendicular to the longitudinal direction is effective to break the band-like structures formed in the longitudinal direction. First of all, impacts were made by shot peening or hammer and solution treatment was performed. But, in these methods, strain was introduced, and though recrystallization could be made after solution treatment but the band-like structures could not be broken. It is considered that this result was caused because microstructures were not stirred in the direction perpendicular to the longitudinal direction.

Then, FSP treatment was performed all over the welding surfaces of the Ni-base alloy forged materials and solution treatment was performed, whereby the band-like structures could be broken.

Moreover, it was found that when FSP treatment is performed, microstructures after recrystallization become fine (crystal grain size number is 2 to 5 by measuring in conformity with Japanese Industrial Standard, JIS G0551 "Steels--Micrographic determination of the apparent grain size") and homogeneous to heighten high-temperature ductility.

FSP treatment equipment is not particularly limited, and equipments on the market can be used. Rotary tools with abrasion resistance at high temperatures are preferably used. Specifically, the tools made of WRe (tungsten-rhenium) alloy can be suitably used.

FSP treatment is performed all over the welding surfaces of the Ni-base alloy forged materials.

Indentation depth of FSP treatment is 2 mm or more, and preferably 2 mm to 3 mm. Penetration depth when forged material is welded is generally approx. 1 mm, but when FSP treatment depth is 1 mm, all of the fine-grained parts of the structure melts and superior high-temperature ductility cannot be obtained. In contrast, when FSP treatment depth exceeds 3 mm, wear of rotary tools and treating time increase.

Solution treatment is performed after FSP treatment. This treatment is performed to recrystallize the microstructure stirred by FSP treatment. The solution treatment is performed under the condition that crystal grain size number after the recrystallization is 2 to 5. This is because sufficient high-temperature ductility is not obtained when the crystal grain size number is less than 2, and creep strength degrades when the crystal grain size number is more than 5. The solution treatment is preferably performed for 1 to 24 hours at 950 to 1200°C.

Large welded structures are fabricated by welding surfaces, which are treated by FSP treatment and solution treatment, of large-size members to each other. The welding method is not particularly limited, and groove welding such as TIG welding can be used.

It is particularly effective to apply the invention to Ni-base alloy large-size forged materials that have duplex grain structures, crystal grain size number of which is, for example, smaller than 1 in dendrite part and larger than 3 in dendrite boundary part, and band-like structures in which carbide segregation layers range in the shape of strip. In addition, the invention is applicable to large casting materials in which strip-shaped carbide segregation occurs in base materials due to solidifying segregation, and can achieve significant results.

### [Embodiments]

The invention will be further detailed below based on embodiments, but the invention is not limited to the embodiments described below. Sample materials A to C and D1 are comparative examples and sample materials D2 to D4 are the embodiments according to the invention.

For Ni-base alloys of which chemical components are described in Table 1, steel ingot of approx. 6 tons was made by vacuum melting and electroslag remelting methods, and then billet of approx. 4 tons was made by hot forging. A pipe with diameter of 750 mm and thickness of 40 mm was made by further hot-working the billet. The pipe was cut by 300 mm into 14 pipes. The sample materials (base materials) were made by solution treating at 1160°C and air cooling the pipes.

**Table 1**

| Chemical components of sample materials (mass%) | | | | | | | | | |
|---|---|---|---|---|---|---|---|---|---|
| Ni | Co | Mo | Cr | W | Al | Ti | Nb | C | B |
| Residue | 15 | 9 | 22 | 0.01 | 1.2 | 0.6 | 0.1 | 0.09 | 0.01 |

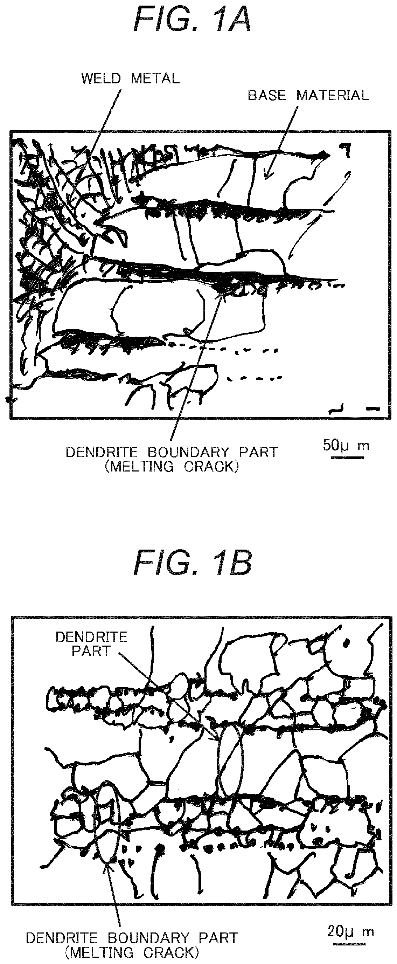

In Figs. 1A and 1B, sketches are illustrated of an optical microscopical observation result of a surface of a sample material, Ni-base alloy large-size forged material. Fig. 1B is an enlarged drawing of Fig. 1A.

In the sample material, band-like structures in which carbide concentration regions range in the shape of strip are observed. The band-like structures were duplex grain structures in which crystal grain size number was 3.0 in carbide concentration regions and 0 in regions other than the carbide concentration regions.

Then, two of the pipes were welded by TIG welding to make sample material A. Weld metal has chemical components described in Table 1, which are the same components as the base material. When surface texture of the sample material A was observed with an optical microscope, hot cracks were found in the carbide concentration regions as the sample material. This is because carbon segregates in the regions and melting point is locally lowered.

Next, welding surfaces of another two pipes were shot peened and then solution treated at 1160°C. And the two pipes were welded by TIG welding as the sample material A to make sample material B. When surface texture of the sample material B was observed with an optical microscope, crystal grains became fine in regions from 0.0 mm (the welding surfaces) to 0.5 mm toward the center in the longitudinal direction of the pipes, but the regions melted when welded and the structure after welding became the same structure as the sample material A, and hot cracks occurred. And the welding surfaces were fine-grained before welding, but band structures did not disappear.

Next, welding surfaces of another two pipes were solution treated at 1160°C after knocked with a hammer, and the two pipes were welded by TIG welding as the sample material A to make sample material C. When surface texture of the sample material C was observed with an optical microscope, regions where crystal grains became fine were observed at the base material side of the boundary of weld metal and the base material but the band structures remained, and hot cracks were observed in the carbide concentration regions.

Next, welding surfaces of another two pipes were solution treated at 1160°C after FSP treated, and the two pipes were welded by TIG welding as the sample material A to make sample materials. A rotary tool made of WRe alloy was used for FSP. By changing insertion depth of the tool, stirring depth was changed to 1 mm, 2 mm, 3 mm, and 4 mm in sequence to make sample materials D1, D2, D3, and D4 respectively. When stirring depth was 2 mm, FSP treatment conditions were as follows: tool revolution speed of 500 rpm, tool moving speed of 100 mm/min, and rotation direction of clockwise viewed from the tool side. The sample materials with other stirring depth were obtained by adjusting these conditions.

In the sample material D1, crystal grains became fine and band structures disappeared in regions treated with FSP and the regions became homogeneous structures before welding, but the treated regions melted at the time of welding. Sectional structures after welding became similar to the sample material A, and hot cracks were also identified.

In the sample material D2, sectional structures before welding were similar to those of the sample material D1, but depth of modified structures were approx. 2 mm and modified structure layers remained approx. 1 mm after welding. In addition, in the sample material D2, hot cracks that were seen in the sample materials A, B, C, and D1 were not identified.

Also in the sample materials D3 and D4, the band structures disappeared similar to D2, and hot cracks were not identified. In D1 to D4, in addition to disappearance of the band structures, crystal grain size number after solution treatment was 2 to 4, whereby superior high-temperature ductility was obtained.

Welding surface treatment, crystal grain size number, and existence or nonexistence of band-like structures and weld cracks of the sample materials A to C, and D1 to D4 are summarized in Table 2.

**Table 2**

| Evaluation results of sample materials | | | | |
|---|---|---|---|---|
| Sample material | Welding surface treatment | Crystal grain size number | Band-like structure | Weld cracking |
| A | - | 0 to 3 | Existence | Existence |
| B | Shot peening | 1 to 6 | Existence | Existence |
| C | Hammer | 1 to 6 | Existence | Existence |
| D1 | FSP treatment (treatment depth: 1 mm) | 2 to 4 | Nonexistence | Existence |
| D2 | FSP treatment (treatment depth: 2 mm) | 2 to 4 | Nonexistence | Nonexistence |
| D3 | FSP treatment (treatment depth: 3 mm) | 2 to 4 | Nonexistence | Nonexistence |
| D4 | FSP treatment (treatment depth: 4 mm) | 2 to 4 | Nonexistence | Nonexistence |

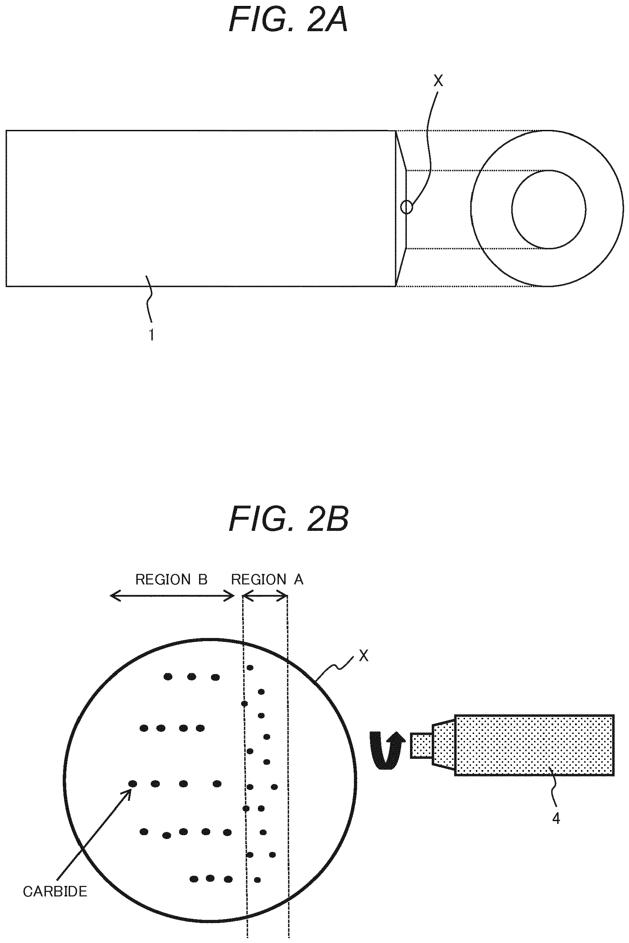

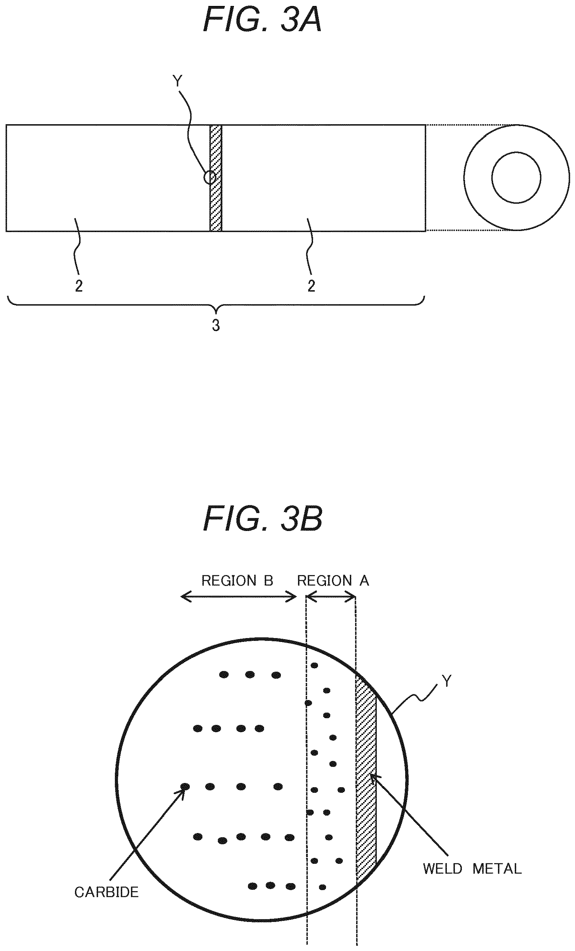

Furthermore, a planar and lateral schematic drawing of a Ni-base alloy large-size forged material according to the invention is illustrated in Fig. 2A, and a planar and lateral schematic drawing of a Ni-base alloy large welded structure made by welding Ni-base alloy large-size members according to the invention is illustrated in Fig. 3A. Enlarged drawings of part X in Fig. 2A and part Y in Fig. 3A are illustrated in Fig. 2B and Fig. 3B respectively.

In the drawings, region A, where FSP treatment has been performed, is a fine-grained structure. In the treatment, stirring depth is set to be 2 mm to 3 mm. In region B, where FSP treatment has not been performed, carbide is distributed homogeneously in the longitudinal direction of the forged member. Welding is performed after solution treatment. Penetration depth at the time of welding is made to be approx. 1 mm. It is understood that the structures of the region A and the region B after welding remain unchanged.

From the results described above, in the invention, it is understood that treating the welding surfaces of the Ni-base alloy large members with FSP treatment and solution treatment cause disappearance of band-like structures and grain refining, whereby the Ni-base alloy large-size welded structures without hot cracks can be provided.

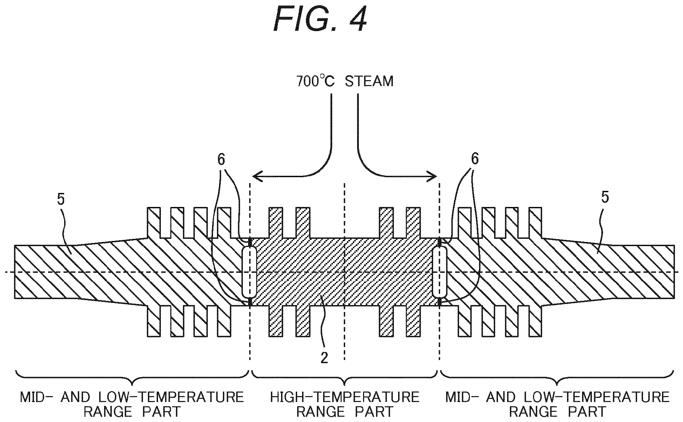

Ni-base alloy large-size members according to the invention are applicable to piping such as boiler piping. In addition, Ni-base alloy large-size members according to the invention can be used to manufacture turbine rotors of a steam turbine and a gas turbine. A sectional schematic drawing of an embodiment of a steam turbine rotor to be fabricated with a Ni-base alloy large-size member according to the invention is illustrated in Fig. 4. The turbine rotor of the embodiment is applied, for example, to steam turbines to which 700°C steam is supplied. In the drawing, a Ni-base alloy large-size member 2 according to the invention is used for a high-temperature range (600 to 700°C) part, ferrite steel 5 is used for mid- and low-temperature range (500°C) parts, and both members are connected with welding part 6. By treating the welding part 6 of the Ni-base alloy large-size member 2 with the FSP treatment and solution treatment, turbine rotors with suppressed hot cracks can be provided. And, although it is disadvantageous from cost viewpoint, turbine rotors can be manufactured by using Ni-base alloy large-size members for mid- and low-temperature range parts, performing FSP treatment and solution treatment, and welding.

The invention is not limited to the embodiments described above, and includes various alternative embodiments. For example, the embodiments described above are detailed for easy understanding of the invention, and the invention is not necessarily limited to the embodiments equipped with all the structures described above. In addition, a part of structures of an embodiment can be replaced with structures of another embodiment, and structures of an embodiment can be joined with structures of another embodiment. Moreover, for a part of structures of each embodiment, addition of another structure, deletion, and substitution can be done.

## Claims

1. A Ni-base alloy large-size member constituting a Ni-base alloy welded structure, comprising:
a base material of the member, having strip-shaped carbide segregation; and
a modified layer formed on a welding groove surface of the member by treatment using Friction stir processing and solution treatment,
wherein the thickness of the modified layer is 2 mm or more and
the modified layer is formed with crystal grain size number of 2 to 5.

2. A method for manufacturing a Ni-base alloy welded structure by welding the Ni-base alloy large-size member according to Claim 1, wherein
welding is performed in such a way that weld penetration depth is shallower than the thickness of the modified layer.

3. A welded type steam turbine rotor, comprising:
the Ni-base alloy large-size member according to Claim 1,
which is welded under the condition that weld penetration depth is shallower than the thickness of the modified layer.

4. The welded type steam turbine rotor according to claim 3, wherein the Ni-base alloy large-size member forms a high-temperature rotor part, which is welded to a low-temperature rotor part formed of ferrite steal.

5. A large-size pipe made of Ni-base alloy constituting boiler piping of a steam turbine plant, wherein
the large-size pipe made of Ni-base alloy is constituted of the Ni-base alloy large-size member according to Claim 1.

## Patentansprüche

1. Großformatiges Bauteil aus einer Legierung auf Ni-Basis, das eine geschweißte Struktur aus einer Legierung auf Ni-Basis bildet, umfassend:
ein Ausgangsmaterial des Bauteils, das eine streifenförmige Carbidseigerung aufweist; und
eine modifizierte Schicht, die auf einer Schweißnutoberfläche des Bauteils durch Behandlung unter Verwendung von Reibrührbearbeitung und Lösungsbehandlung gebildet wird,
wobei die Dicke der modifizierten Schicht 2 mm oder mehr beträgt und
die modifizierte Schicht mit einer Kristallkorngrößenzahl von 2 bis 5 gebildet wird.

2. Verfahren zur Herstellung einer geschweißten Struktur aus einer Legierung auf Ni-Basis durch Schweißen des großformatigen Bauteils aus einer Legierung auf Ni-Basis nach Anspruch 1, wobei
das Schweißen in einer Weise erfolgt, dass die Eindringtiefe der Schweißnaht geringer ist als die Dicke der modifizierten Schicht.

3. Geschweißter Dampfturbinenrotor, umfassend:
das großformatige Bauteil aus einer Legierung auf Ni-Basis nach Anspruch 1,
die unter der Bedingung geschweißt wird, dass die Eindringtiefe der Schweißnaht geringer ist als die Dicke der modifizierten Schicht.

4. Geschweißter Dampfturbinenrotor nach Anspruch 3, wobei das großformatige Bauteil aus einer Legierung auf Ni-Basis ein Hochtemperaturrotorteil bildet, das mit einem Niedertemperaturrotorteil aus Ferritstahl verschweißt wird.

5. Großformatiges Rohr aus einer Legierung auf Ni-Basis, das die Kesselverrohrung einer Dampfturbinenanlage bildet, wobei
das großformatige Rohr aus einer Legierung auf Ni-Basis aus dem großformatigen Bauteil aus einer Legierung auf Ni-Basis nach Anspruch 1 gebildet ist.

## Revendications

1. Elément de grande taille à alliage à base de Ni constituant une structure soudée à alliage à base de Ni, comprenant :
un matériau de base de l'élément, ayant une ségrégation de carbure en forme de bande ; et
une couche modifiée formée sur une surface de sillon de soudure de l'élément par un traitement utilisant un traitement par friction-malaxage et un traitement de solution,
où l'épaisseur de la couche modifiée est de 2 mm ou plus et
la couche modifiée est formée avec un nombre de taille de grain de cristal de 2 à 5.

2. Procédé de fabrication d'une structure soudée à alliage à base de Ni par soudage de l'élément de grande taille à alliage à base de Ni selon la revendication 1, où
le soudage est effectué de telle manière que la profondeur de pénétration de soudure est moins profonde que l'épaisseur de la couche modifiée.

3. Rotor de turbine à vapeur de type soudé, comprenant :
l'élément de grande taille à alliage à base de Ni selon la revendication 1,
qui est soudé à la condition que la profondeur de pénétration de soudure est moins profonde que l'épaisseur de la couche modifiée.

4. Rotor de turbine à vapeur de type soudé selon la revendication 3, dans lequel l'élément de grande taille à alliage à base de Ni forme une partie du rotor à haute température, qui est soudée à une partie de rotor à basse température formée d'acier de ferrite.

5. Tuyau de grande taille fabriqué d'un alliage à base de Ni constituant la tuyauterie de chaudière d'une installation de turbine à vapeur, dans lequel
le tuyau de grande taille fabriqué d'alliage à base de Ni est constitué de l'élément de grande taille à alliage à base de Ni selon la revendication 1.
